# EUROPÄISCHE PATENTSCHRIFT

(11) **EP 2 801 448 B1**
(45) Veröffentlichungstag und Bekanntmachung des Hinweises auf die Patenterteilung: **01.11.2017**
(21) Anmeldenummer: 13166684.4
(22) Anmeldetag: 06.05.2013
(51) Int. Cl.: B25D 16/00, B25D 17/24, B25D 11/00, F16B 13/12

(54) **Handwerkzeugmaschine**
Manual tool machine
Machine-outil manuelle

(43) Veröffentlichungstag der Anmeldung: 12.11.2014
(73) Patentinhaber: HILTI Aktiengesellschaft, 9494 Schaan (LI)
(72) Erfinder: Holubarsch, Markus, 86899 Kaufering (DE); Schmid, Stefan, 86929 Untermühlhausen (DE)
(74) Vertreter: Hilti Aktiengesellschaft Corporate Intellectual Property

(56) Entgegenhaltungen:
- WO-A1-96/15881
- US-A- 2 455 885
- US-A- 3 170 523
- US-A- 3 531 068
- US-A1- 2003 165 369

## Beschreibung

### GEBIET DER ERFINDUNG

Die vorliegende Erfindung betrifft eine Handwerkzeugmaschine gemäß dem Oberbegriff des Anspruchs 1, insbesondere meißelnde Handwerkzeugmaschinen.

Ein Bohrhammer, wie z.B. aus der US6981625 BB bekannt, offenbart die Merkmale des Oberbegriffs des Anspruchs 1 und besteht aus mehreren Komponenten, die untereinander und mit dem Gehäuse verschraubt sind. Ein erstes Bauteil weist entsprechend ein Innengewinde und ein zweites Bauteil ein Auge auf. Die Schraube ist durch das Auge des zweiten Bauteils in das erste Bauteil gesteckt und in dessen Innengewinde verschraubt. Diese Befestigung kann vorteilhafterweise gelöst werden, was insbesondere bei hochwertigen Geräten für einen Service notwendig ist.

WO96/15881A1 beschreibt einen pneumatischen Meißelhammer mit einem austauschbaren Werkzeughalter. Der Werkzeughalter ist auf einen vorstehenden Dorn des Meißelhammers aufgesetzt. Zwei Bohrungen laufen quer durch den Werkzeughalter und den Dorn; in die Bohrungen sind Splinte eingelegt, welche den Werkzeughalter an dem Dorn sichern. Die Bohrung ist teilweise mit einer Hülse aus Polyurethan ausgekleidet, um eine Übertragung von Vibrationen zu dämpfen.

### OFFENBARUNG DER ERFINDUNG

Die erfindungsgemäße Handwerkzeugmaschine hat eine Werkzeugaufnahme, einen Antrieb, zum Antreiben der Werkzeugaufnahme und ein Gehäuse, in dem der Antrieb, angeordnet ist. Ein stationäres Bauteil des Antriebs ist mit wenigstens einem Element, wobei das Element das Gehäuse oder ein weiteres stationären Bauteil des Antriebs, ist, mittels wenigstens einer lösbaren Klemmverbindung verbunden. Die Klemmverbindung hat eine zylindrische Tasche in dem einen stationären Bauteil, eine in die zylindrische Tasche eingesetzte Hülse aus Kunststoff und eine in die Hülse eingeschraubte Schraube.

Der Formschluss einer Schraubverbindung mit Gewinde und Gegengewinde führt zu einer sehr steifen Anbindung, welche eine Übertragung von Vibrationen begünstigt. Die genannte Klemmverbindung kommt ohne Formschluss aus und kann dennoch wie eine Schraubverbindung gelöst werden.

Die Antriebskomponenten, insbesondere das Schlagwerk, in geringerem Maße auch Motor und Getriebe, sind Quelle für die Vibrationen. Deren stationäre Komponenten, z.B. Führungsrohr, Stator, Getriebegehäuse, über die obige Klemmverbindung an das Gehäuse oder untereinander anzubinden lohnt den erhöhten Aufwand der mehrteiligen Klemmverbindung.

Eine Ausgestaltung sieht vor, dass die Tasche in einer metallischen Wandung des einen stationären Bauteils angeordnet ist. Die Hülse kann durch die Schraube in radialer Richtung aufgespreizt sein. Die Hülse kann längs ihrer Achse verlaufende Schlitze aufweisen.

Eine Ausgestaltung sieht vor, dass die Tasche radiale Aussparungen aufweist. Die Hülse hat vorteilhafterweise radial nach Außen vorstehende Haken, welche in die Aussparungen lose eingreifen.

Eine Ausgestaltung sieht vor, dass die Schraube einen Schaft mit einem Gewinde und einen Kopf aufweist, das Element ein Auge aufweist und der Schaft durch das Auge geführt und der Kopf an dem Auge anliegend ist.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrhammer
Fig. 2 eine Befestigung eines Führungsrohrs
Fig. 3, 4 und 5 Detailansichten der Befestigung

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

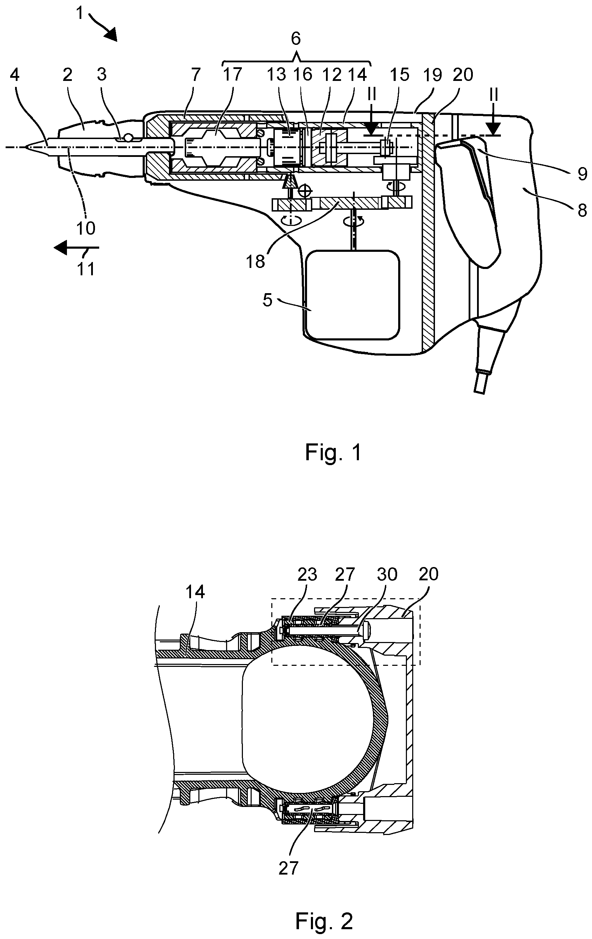

Fig. 1 zeigt als Beispiel einer meißelnden Handwerkzeugmaschine schematisch einen Bohrhammer **1.** Der Bohrhammer **1** hat eine Werkzeugaufnahme **2,** in welche ein Schaftende **3** eines Werkzeug, z.B. eines des Bohrmeißels **4,** eingesetzt werden kann. Einen primären Antrieb des Bohrhammers **1** bildet ein Elektromotor **5,** welcher ein Schlagwerk **6** und eine Abtriebswelle **7** antreibt. Ein Anwender kann den Bohrhammer **1** mittels eines Handgriffs **8** führen und mittels eines Systemschalters **9** den Bohrhammer **1** in Betrieb nehmen. Im Betrieb dreht der Bohrhammer **1** den Bohrmeißel **4** kontinuierlich um eine Arbeitsachse **10** und kann dabei den Bohrmeißel **4** in Schlagrichtung **11** längs der Arbeitsachse **10** in einen Untergrund schlagen.

Das Schlagwerk **6** ist beispielsweise ein pneumatisches Schlagwerk **6.** Ein Erreger **12** und ein Schläger **13** sind in einem Führungsrohr **14** des Schlagwerks **6** längs der Arbeitsachse **10** beweglich geführt. Der Erreger **12** ist über einen Exzenter **15** oder einen Taumelfinger an den Motor **5** angekoppelt und zu einer periodischen, linearen Bewegung gezwungen. Eine Luftfeder gebildet durch eine pneumatische Kammer **16** zwischen Erreger **12** und Schläger **13** koppelt eine Bewegung des Schlägers **13** an die Bewegung des Erregers **12** an. Der Schläger **13** kann direkt auf ein hinteres Ende des Bohrmeißels **4** aufschlagen oder mittelbar über einen im Wesentlichen ruhenden Zwischenschläger **17** einen Teil seines Impuls auf den Bohrmeißel **4** übertragen.

Der Motor **5** ist über ein Getriebe **18** an den Exzenter **15** angekoppelt. Der Motor **5,** das Schlagwerk **6** und das Getriebe sind innerhalb eines Maschinengehäuses **19** angeordnet und an diesem befestigt. Das beispielhafte Maschinengehäuse **19** hat eine vertikale Platte **20,** die eine dem Werkzeug zugewandte (d.h. vordere) Schale des Maschinengehäuses **19** abschließt.

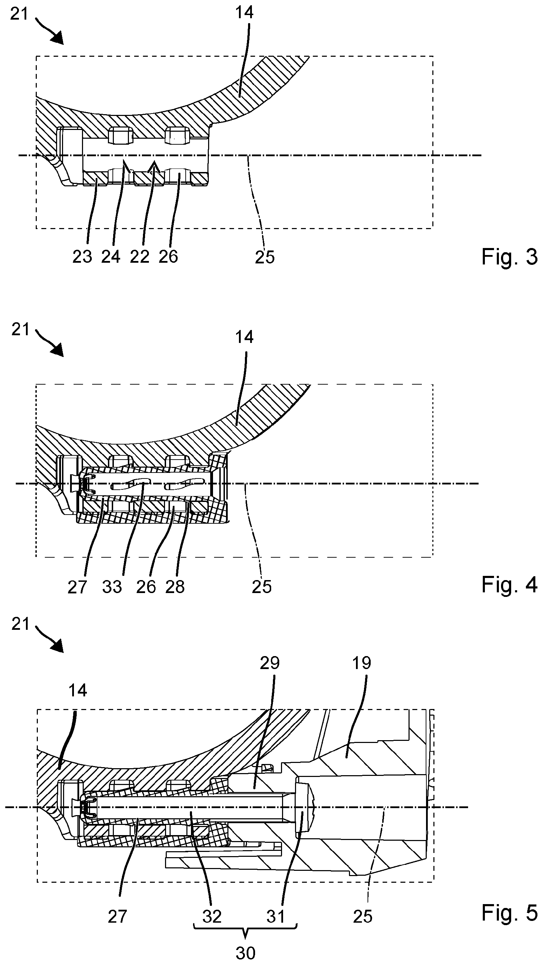

Das Führungsrohr **14** ist mittels einer lösbaren Klemmverbindung **21** an der Platte **20** befestigt. Fig. 2 zeigt einen Teilschnitt durch das Führungsrohr **14** und die Platte **20** in der Ebene II-II. Fig. 3, Fig. 4 und Fig. 5 zeigen die Klemmverbindung **21** in unterschiedlichen Montagestadien.

Das Führungsrohr **14** hat an seiner Außenseite eine oder mehrere zylindrische Taschen **22** (Fig. 3). Die metallische Wandung **23** der Tasche **22** ist materialschlüssig mit dem Führungsrohr **14** verbunden. Vorzugsweise werden das Führungsrohr **14** und die zylindrische Tasche **22** in einem Stück gegossen. Vorzugsweise wird die Tasche **22** nicht spanend bearbeitet, sondern hat nach dem Urformen (Gießen) bereits einen ausreichend genau definierten Innendurchmesser. Die Innenfläche **24** ist weitgehend glatt. Alternativ kann die Tasche **22** in die Außenseite gebohrt werden. Die Innenfläche **24** ist vorzugsweise glatt, insbesondere ohne Gewinde.

Die zylindrische Innenfläche **24** kann längs ihrer Achse **25** in Abständen durch senkrecht zu der Achse **25** verlaufende Aussparungen **26** durchstoßen sein. Die Abstände zwischen den Aussparungen **26** ist größer als die Abmessung der Aussparungen **26** längs der Achse der Innenfläche **24.** Beispielsweise liegt eine Abmessung der Aussparungen **26** längs der Achse im Bereich zwischen 2 mm und 5 mm. Die Innenfläche **24** zwischen den Aussparungen **26** ist glatt und unstrukturiert.

Eine Hülse **27** aus Kunststoff ist in die zylindrische Tasche **22** eingelegt (Fig. 4). Die Hülse **27** hat einen hohlzylindrischen Grundkörper. Der Außendurchmesser des Grundkörpers ist etwa gleich dem Innendurchmesser der Tasche **22.** Die Hülse **27** liegt flächig an der zylindrischen Innenfläche **24** der Tasche **22** an. Das Einschieben oder Einsetzen erfolgt aufgrund der glatten Innenfläche **24** der Tasche **22** weitgehend kraftfrei, was eine einfache Montage ermöglicht.

Die Hülse **27** kann radial vorstehende Haken **28** aufweisen, welche in die Aussparungen **26** eingreifen. Die Haken **28** können ein Herausfallen der Hülse **27** während der Montage verhindern.

Die Platte **20** hat ein Auge **29,** welches in axialer Verlängerung der Tasche **22** angeordnet ist. Eine Schraube **30** ist durch das Auge **29** in die Hülse **27** gesteckt (Fig. 5). Ein Kopf **31** der Schraube **30** liegt auf der Platte **20** auf. Das Außengewinde **32** der Schraube **30** ist in die Hülse **27** eingeschraubt. Das Außengewinde **32** dehnt die Hülse **27** in radialer Richtung und bewirkt einen Kraftschluss zwischen der Hülse **27** und der Tasche **22.**

Die Hülse **27** hat mehrere längs der Achse verlaufende Schlitze 33. Die Schlitze **29 33** erhöhen die radiale Klemmkraft. Die Hülse **27** hat aufgrund der Aussparungen **26** die Tendenz sich eher in radialer als axialer Richtung zu weiten, wenn die Schraube **30** eingeschraubt wird.

Die Schraube **30** kann für eine Demontage des Führungsrohrs **14** aus der Hülse **27** herausgedreht werden.

## Patentansprüche

1. Handwerkzeugmaschine mit
einer Werkzeugaufnahme (2), einem Antrieb (5, 6) zum Antreiben der Werkzeugaufnahme (2) und einem Gehäuse (19), in dem der Antrieb (5, 6) angeordnet ist, wobei
ein stationäres Bauteil (14) des Antriebs (5) mit wenigstens einem Element aus Gehäuse (19) oder einem weiteren stationären Bauteil des Antriebs (5, 6) mittels wenigstens einer lösbaren Klemmverbindung (21) verbunden ist, **dadurch gekennzeichnet, dass** die
Klemmverbindung (21) eine zylindrische Tasche (22) in dem einen stationären Bauteil (14), eine in die zylindrische Tasche (22) eingesetzte Hülse (27) aus Kunststoff und eine in die Hülse (27) eingeschraubte Schraube (30) umfasst.

2. Handwerkzeugmaschine nach Anspruch 1, **dadurch gekennzeichnet, dass** die Tasche (22) in einer metallischen Wandung (23) des einen stationären Bauteils (14) angeordnet ist.

3. Handwerkzeugmaschine nach Anspruch 1 oder 2, **dadurch gekennzeichnet, dass** die Hülse (27) durch die Schraube (30) in radialer Richtung aufgespreizt ist.

4. Handwerkzeugmaschine nach einem der vorhergehenden Ansprüche, **dadurch gekennzeichnet, dass** die Tasche (22) radiale Aussparungen (26) aufweist.

5. Handwerkzeugmaschine nach einem der vorhergehenden Ansprüche, **dadurch gekennzeichnet, dass** die Hülse (27) radial nach Außen vorstehende Haken (28) aufweist.

6. Handwerkzeugmaschine nach einem der vorhergehenden Ansprüche, die Hülse (27) längs ihrer Achse (25) verlaufende Schlitze (33) aufweist.

7. Handwerkzeugmaschine nach einem der vorhergehenden Ansprüche, **dadurch gekennzeichnet, dass** die Schraube (30) einen Schaft mit einem Gewinde (32) und einen Kopf (31) aufweist, das Element (19) ein Auge (29) aufweist und der Schaft durch das Auge (29) geführt und der Kopf (31) an dem Auge (29) anliegend ist.

## Claims

1. Hand-held power tool comprising a tool holder (2), a drive (5, 6) for driving the tool holder (2) and a housing (19) in which the drive (5, 6) is arranged, wherein a stationary component (14) of the drive (5) is connected to at least one element consisting of either the housing (19) or another stationary component of the drive (5, 6) by means of at least one releasable clamped connection (21), **characterised in that** the clamped connection (21) includes a cylindrical pocket (22) in the one stationary component (14), a sleeve (27) made of plastic inserted into the cylindrical pocket (22) and a screw (30) screwed into the sleeve (27).

2. Hand-held power tool according to claim 1, **characterised in that** the pocket (22) is arranged in a metal wall (23) of the one stationary component (14).

3. Hand-held power tool according to claim 1 or claim 2, **characterised in that** the sleeve (27) is expanded in the radial direction by the screw (30).

4. Hand-held power tool according to one of the preceding claims, **characterised in that** the pocket (22) has radial recesses (26).

5. Hand-held power tool according to one of the preceding claims, **characterised in that** the sleeve (27) has radially outwardly projecting hooks (28).

6. Hand-held power tool according to one of the preceding claims, **characterised in that** the sleeve (27) has slits (33) extending along its axis (25).

7. Hand-held power tool according to one of the preceding claims, **characterised in that** the screw (30) has a shank with a thread (32) and a head (31), the element (19) has an eye (29), the shank is guided through the eye (29) and the head (31) bears against the eye (29).

## Revendications

1. Machine-outil manuelle comportant un porte-outil (2), un mécanisme d'entraînement (5, 6) pour entraîner le porte-outil (2) et un carter (19) dans lequel est agencé le mécanisme d'entraînement (5, 6),
dans laquelle un composant fixe (14) du mécanisme d'entraînement (5) est relié à au moins un élément parmi le carter (19) ou un autre composant fixe du mécanisme d'entraînement (5, 6) au moyen d'au moins une liaison par serrage (21), amovible,
**caractérisée en ce que** la liaison par serrage (21) inclut une poche cylindrique (22) dans le composant fixe (14), une douille (27) en matière plastique insérée dans la poche cylindrique (22) et une vis (30) vissée dans la douille (27).

2. Machine-outil manuelle selon la revendication 1, **caractérisée en ce que** la poche (22) est agencée dans une paroi métallique (23) du premier composant fixe (14).

3. Machine-outil manuelle selon la revendication 1 ou 2, **caractérisée en ce que** la douille (27) est écartée par la vis (30) dans une direction radiale.

4. Machine-outil manuelle selon l'une des revendications précédentes, **caractérisée en ce que** la poche (22) comporte des évidements radiaux (26).

5. Machine-outil manuelle selon l'une des revendications précédentes, **caractérisée en ce que** la douille (27) comporte des crochets (28) faisant radialement saillie vers l'extérieur.

6. Machine-outil manuelle selon l'une des revendications précédentes, dans laquelle la douille (27) comporte des fentes (33) s'étendant le long de son axe (25).

7. Machine-outil manuelle selon l'une des revendications précédentes, **caractérisée en ce que** la vis (30) comporte une tige avec un filetage (32) et une tête (31), l'élément (19) comporte un oeillet (29) et la tige est guidée à travers l'oeillet (29) et la tête (31) est en appui sur l'oeillet (29).
